# EUROPEAN PATENT SPECIFICATION

(11) **EP 3 590 680 B1**
(45) Date of publication and mention of the grant of the patent: **05.03.2025**
(21) Application number: 19177156.7
(22) Date of filing: 29.05.2019
(51) Int. Cl.: B29C 45/17, B29C 45/50, B29C 45/60

(54) **INJECTION MOLDING MACHINE AND MOLDING METHOD**
SPRITZGIESSMASCHINE UND FORMVERFAHREN
MACHINE DE MOULAGE PAR INJECTION ET PROCÉDÉ DE MOULAGE

(30) Priority: 13.06.2018 JP 2018112517
(43) Date of publication of application: 08.01.2020
(73) Proprietor: Nissei Plastic Industrial Co., Ltd., Hanishina-gun, Nagano 389-0693 (JP)
(72) Inventor: MURATA, Hirofumi, Nagano-ken 389-0693 (JP); UEHARA, Takemi, Nagano-ken 389-0693 (JP); YODA, Hozumi, Nagano-ken 389-0693 (JP)
(74) Representative: Haseltine Lake Kempner LLP

(56) References cited:
- WO-A1-2017/214387
- US-A- 3 335 464
- US-A- 4 850 841

## Description

### Technical Field

**0001** This invention relates to an injection molding machine having a screw forward/rear move driving section to forwardly or rearwardly move a screw at least by a hydraulic cylinder and the molding method thereof.

### Background Art

**0002** Conventionally, an injection molding machine has been known that includes a screw rotation driving section to rotate a screw inserted to a heat sleeve and a screw forward/rear move driving section to forwardly or rearwardly move this screw at least by a hydraulic cylinder (in particular a pair of left and right hydraulic cylinders), including an injection molding machine including an injection apparatus disclosed in Patent Literature 1 and an injection molding machine disclosed in Patent Literature 2.

**0003** The injection molding machine (injection apparatus) disclosed in Patent Literature 1 includes an injection cylinder (heat sleeve) including therein an injection screw rotatably provided in a slidable manner in an axial direction; a hopper for supplying resin material into this heat sleeve; a hopper jacket attached to this hopper and integrated with this heat sleeve; and a pair of left and right injection hydraulic cylinders to allow the injection screw to slide relative to the heat sleeve. The hopper jacket is integrated with the pair of left and right injection hydraulic cylinders.

**0004** The injection molding machine disclosed in Patent Literature 2 is configured to include an injection unit by which the injection screw in the injection cylinder (heat sleeve) is allowed to rearwardly move while rotating to plasticize the resin and a pair of hydraulic cylinders provided at left and right sides of the heat sleeve are used to immediately move the injection screw in a forward direction to inject the resin collected at a tip end of the injection screw through an injection nozzle at the tip end of the heat sleeve into the cavity of a metal mold.

Patent Literature 3 discloses a plasticizing and injecting unit for use in an injection molding machine, the plasticizing and injecting unit having a carrier and supply block including a pair of second bores that are symmetrical with respect to an injection axis, The second bores contain advance-retract cylinders operable to axially advance and retract the plasticizing and injecting unit, and the third bores contain injection cylinders operable to inject molten plastic material into an injection mold.

Patent Literature 4 discloses an injection molding apparatus comprising a rotor interconnected to a distal end of one or more elongated cables in an arrangement such that the one or more elongated cables are controllably rotatably drivable via controlled driven rotation of the rotor around the rotor axis, wherein the one or more elongated cables have a cable axis and are flexibly bendable along at least a portion of their axis into a curved or curvilinear configuration. The injection molding apparatus further comprises a rotary to linear motion converter interconnected to the rotor and an upstream end of the valve pin.

### Summary of Invention

### Technical Problem

**0005** However, the following disadvantage is caused in the case of the above-described conventional injection molding machine (injection apparatus).

**0006** Firstly, a user using an injection molding machine produces molded pieces of various products and parts. However, one injection molding machine cannot always produce all of various molded pieces. Thus, in order to produce a large-size molded piece for example by an available injection molding machine, the actual situation is that the production is achieved by exchanging the parts (specifically, the parts are changed to a screw and a heat sleeve that can handle the large-size molded piece). In this case, the screw and the heat sleeve are a precision part or a large-sized part. Thus, a disadvantage is caused in which the part exchange inevitably requires a significantly-increased cost and the use of the large-sized part requires the exchange operation with a great amount of labor.

**0007** Secondly, the high-accuracy production of precision molded pieces requires resin to enter minute parts of the metal mold cavity, thus requiring a high-pressure injection capacity. This case can be handled by the exchange of the screw and the heat sleeve to a certain level. However, a situation may be caused where appropriate molding conditions cannot be set to various molded pieces. In particular, a disadvantage is caused in which the need to change the screw and the heat sleeve responsible for the plasticization of the resin causes a change of the plasticize environment (plasticization performance), which may lead to a variation of the molding quality or the mixture of not-yet-plasticized resin.

**0008** It is an objective of this invention to provide an injection molding machine for solving the disadvantage existing in the prior art as described above and the molding method thereof.

### Solution to Problem

**0009** In order to eliminate the above-described disadvantage, aspects of embodiments provide injection molding machines and molding methods of injection molding machines, as defined in the independent claims.

**0010** Further aspects of embodiments are defined in the dependent claims.

**0011** For the avoidance of doubt, the claims define the scope of the invention.

### Advantageous Effects of Invention

**0012** The injection molding machine 1 and the molding method thereof according to this invention can provide remarkable effects as described below.
(1) The injection apparatus (1i) includes the cylinder attachment mechanism (5m) having the cylinder detachable section (7m) providing the detachability of at least two or more different types of hydraulic cylinders (6a, 6b, 6c) that can be adapted to a molded piece moldable by the unique screw (3s) set to have the L/D ratio as the specific value Ns. Thus, even when molded pieces such as various products or parts are produced, the production can be provided by the exchange of a selected hydraulic cylinder (6a (or 6b, 6c)) without requiring a change of the screw and the heat sleeve. In particular, a general-purpose and commercially-available hydraulic cylinder (6a (or 6b, 6c)) can be used and thus the part exchange can be performed with a significantly-reduced cost. Furthermore, the exchange requires a part smaller than the screw and the heat sleeve, thus realizing the exchange operation in a relatively easy and simple manner.
(2) The unique screw (3s) having the L/D ratio set as the specific value (Ns) to the injection apparatus (1i) can provide the selection of the unique screw (3s) in advance that can widely cover the molding of various molded pieces. Thus, the optimal hydraulic cylinder (6a (or 6b, 6c)) can be selected to a large-sized molded piece or a precision molded piece for example to thereby set appropriate molding conditions to various molded pieces. Furthermore, the elimination of the need to change the unique screw (3s) and the heat sleeve (2) can provide a fixed plasticization environment (plasticization performance) and can avoid an unwanted plasticization variation having an influence on the quality of the molded piece such as insufficient plasticization, thus contributing to the improvement of the qualities of various molded pieces.
(3) According to a preferred embodiment, the specific value Ns selected from a range from 18 to 25 includes a value approximately ranging from 22 to 24 generally desirably used as the L/D ratio. In particular, this invention assumes that the unique screw 3s is used with a fixed resin volume. Thus, a desirable value can be easily selected also from a viewpoint of covering the molding with various anticipated molding conditions (molded pieces).
(4) According to a preferred embodiment, the respective hydraulic cylinders 6a, 6b, and 6c having different maximum pressures and/or different maximum speeds eliminate the need to change the unique screw 3s and the heat sleeve 2. Since a resin volume Qm is fixed, the respective hydraulic cylinders 6a, 6b, and 6c can be selected by merely selecting the maximum pressure and/or the maximum speed, thus providing the selection of the respective hydraulic cylinders 6a, 6b, and 6c in an easy manner.
(5) According to a preferred embodiment, the type of a usable hydraulic cylinder is not limited because the hydraulic cylinders 6a, 6b, and 6c may be a double rod-type hydraulic cylinder or a single rod-type hydraulic cylinder for example. Thus, the hydraulic cylinders 6a, 6b, and 6c can be selected with increased freedom and a hydraulic control system can be designed with increased freedom. Thus, an appropriate hydraulic control system can be structured considering the advantages of the double rod-type one and the single rod-type one, respectively.
(6) According to a preferred embodiment, a cylinder attachment mechanism 5m is configured to include a fixed block section 11 having a fixed position that has a heat sleeve fixation section 12 supporting the rear end 2r of the heat sleeve 2 and a pair of front detachable sections 13p and 13q constituting the cylinder detachable section 7m that are provided at both sides of this the heat sleeve fixation section 12 and that provides the detachability of the hydraulic cylinders 6a..., 6b..., and 6c..., respectively. Thus, the respective hydraulic cylinders 6a, 6b, and 6c may be attached to the front detachable sections 13p and 13q functioning as an attachment base of the cylinder body. Thus, the simplified attachment structure can provide an easier attachment and can contribute to a smaller size and a lower cost.
(7) According to a preferred embodiment, the cylinder attachment mechanism 5m is configured to include the screw rotation driving section 4 that is provided at the rear side of the fixed block section 11 and that provides the rotation of the rear end of the unique screw 3s inserted to the heat sleeve 2 and the support block section 14 having a pair of rear detachable sections 15p and 15q that are provided at both sides of this the screw rotation driving section 4 and that constitute the cylinder detachable section 7m providing the detachability of the tip ends of the piston rods 6ar..., 6br..., and 6cr... protruding from the respective hydraulic cylinders 6a..., 6b..., and 6c..., respectively. Thus, the piston rods 6ar..., 6br..., and 6cr... in the respective hydraulic cylinders 6a, 6b, and 6c may be attached to the rear detachable sections 15p and 15q. Thus, the simplified attachment structure can provide an easier attachment and can contribute to a smaller size and a lower cost.

### Brief Description of Drawings

**0020**
Fig. 1 is a plan view illustrating an injection apparatus in which a hydraulic cylinder in an injection molding machine according to a preferred embodiment of this invention is removed.
Fig. 2 is a perspective view illustrating the entirety of the injection apparatus in the injection molding machine.
Fig. 3 is a plan view illustrating the entirety of the injection apparatus in the injection molding machine.
Fig. 4 is a perspective view illustrating a fixed block section of a cylinder attachment mechanism provided in the injection apparatus of the injection molding machine.
Fig. 5 is a cross-sectional side view illustrating the fixed block section.
Fig. 6 is a rear view illustrating the fixed block section.
Fig. 7 is a perspective view illustrating a support block section of a cylinder attachment mechanism provided in the injection apparatus of the injection molding machine.
Fig. 8 is a schematic view illustrating a unique screw provided in the injection apparatus of the injection molding machine.
Fig. 9 illustrates the relation between the resin capacity and the injection pressure regarding the hydraulic cylinder size for the purpose of explaining the principle of the injection molding machine.
Fig. 10 is a partial cross-sectional side view illustrating a method of attaching a hydraulic cylinder to a cylinder attachment mechanism provided in the injection apparatus of the injection molding machine.
Fig. 11 is a flowchart illustrating the principle of the molding method of the injection molding machine.
Fig. 12 is a perspective view illustrating a single rod-type hydraulic cylinder according to a modification example provided in the cylinder attachment mechanism of the injection molding machine.
Fig. 13 is a side view illustrating an attachment method using the hydraulic cylinder according to the modification example as an attachment in the cylinder attachment mechanism provided in the injection molding machine.

### Description of Embodiments

**0021** Next, the following section will describe a preferred embodiment according to this invention in detail based on the drawings.

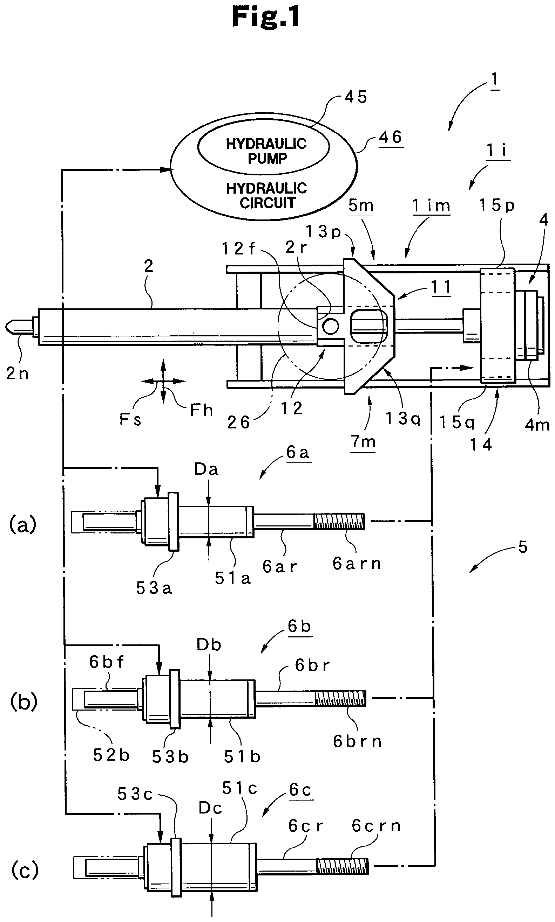

**0022** First, the following section will specifically describe the configuration of the injection molding machine 1 according to this embodiment with reference to Fig. 1-Fig. 7.

**0023** In the drawing, the reference numeral 1 denotes an injection molding machine in which a clamping apparatus is omitted (i.e., an injection apparatus 1i). The injection apparatus 1i includes a base frame 21 functioning as a pair of left and right guide rails 21r. This base frame 21 is provided on a molding machine bed (not shown) via a slide mechanism. Thus, the base frame 21 is supported on a molding machine bed to be slidably displaced in a front-and-rear direction Fs and is caused by a nozzle touch cylinder (not shown) to move in the front-and-rear direction Fs.

**0024** The base frame 21 has thereon the cylinder attachment mechanism 5m. This cylinder attachment mechanism 5m includes a pair of front and rear units (i.e., a fixed block section 11 as a front unit and a support block section 14 as a rear unit).

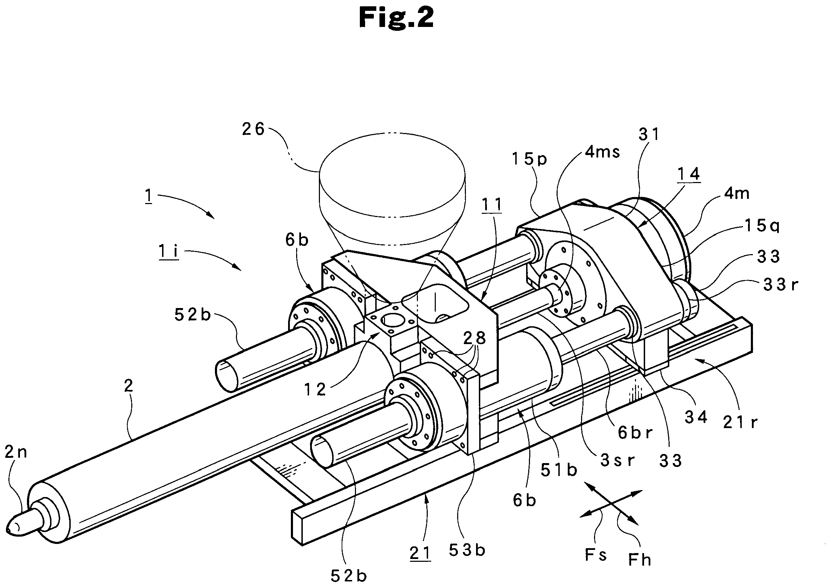

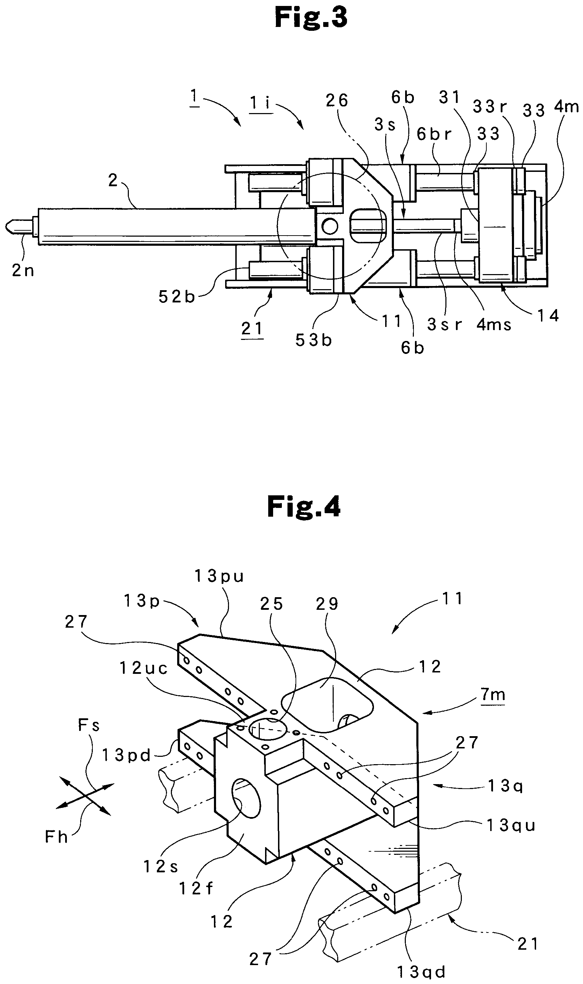

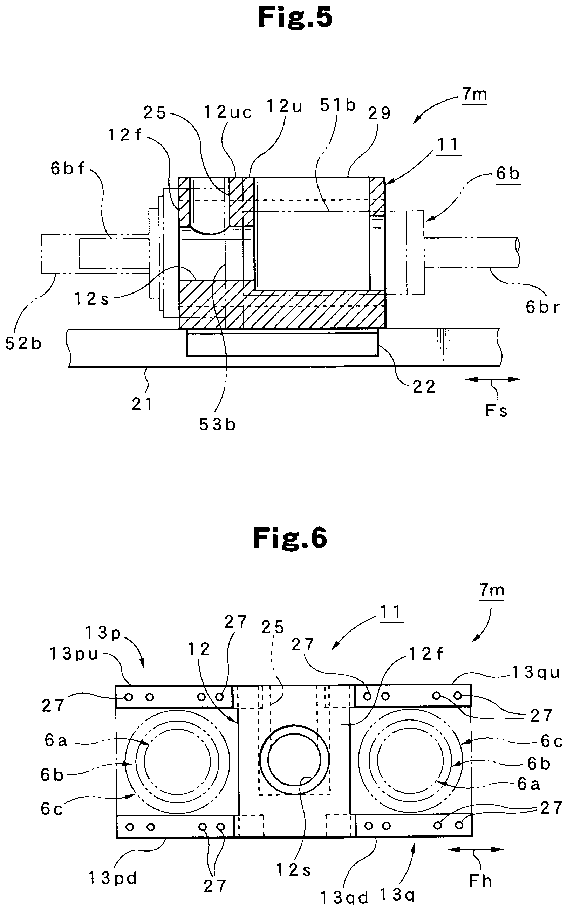

**0025** The fixed block section 11 is fixed by being positioned at an intermediate position of the base frame 21. In an embodiment, as shown in Fig. 5, an example is shown in which the fixed block section 11 and the base frame 21 are fixed via a plurality of attachment plates 22.... Fig. 4-Fig. 6 show the fixed block section 11 configured in an integrated manner as a part. This fixed block section 11 has a heat sleeve fixation section 12 at a center position in a left-and-right direction Fh. This heat sleeve fixation section 12 has a front face 12f to which the rear end 2r of the heat sleeve 2 having an injection nozzle 2n in a front end is attached and fixed. Thus, the front-and-rear direction Fs of the heat sleeve fixation section 12 is inserted with a screw insertion hole 12s having a circular cross section to which a unique screw 3s (which will be described later) is inserted. A front face 12u of the heat sleeve fixation section 12 has a front-side position provided at a hopper attachment face 12uc. A material dropping hole 25 is formed from this hopper attachment face 12uc to the screw insertion hole 12s. This hopper attachment face 12uc is attached with a hopper 26 shown in Fig. 2 by the virtual line.

**0026** At both of the left and right sides of the heat sleeve fixation section 12, a pair of left and right front detachable sections 13p and 13q are provided in an integrated manner that constitute the front side (one side) of a cylinder detachable section 7m. A front detachable section 13p at the right side is configured by an upper-front detachable section 13pu provided at the upper side and a lower-the front detachable section 13qd provided at the lower side so that the former and the latter are parallelly protruded to the right side in the horizontal direction, respectively. The front detachable section 13q at the left side is configured by an upper-front detachable section 13qu provided at the upper side and a lower-the front detachable section 13qd provided at the lower side that are parallelly protruded to the left side in the horizontal direction, respectively.

**0027** In this manner, the four front detachable sections 13pu, 13pd, 13qu, and 13qd are provided at the left and right sides in the upper and lower directions, respectively. The respective front detachable sections 13pu, 13pd, 13qu, and 13qd, which have faces orthogonal to the front-and-rear direction Fs, have front end faces each of which includes a plurality of (or exemplarily four) screw holes 27.... In this case, one front detachable section 13p and the other front detachable section 13q are formed to have the same configuration except for being symmetric in the left-and-right direction and have sufficient strength and rigidity.

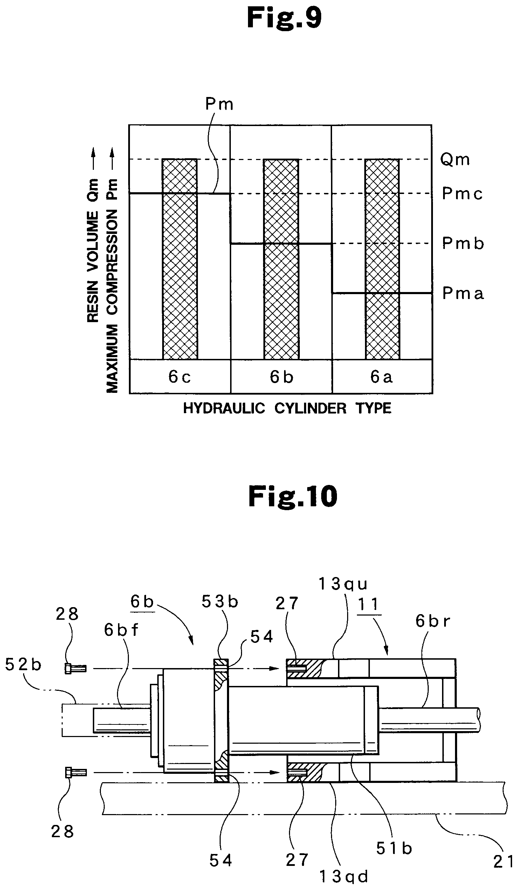

**0028** Thus, the respective hydraulic cylinders 6a..., 6b..., and 6c... (which will be described later) can be attached and fixed to the front end faces of the respective front detachable sections 13pu, 13pd, 13qu, and 13qd by a plurality of bolts 28... (see Fig. 10). Specifically, the front sides of the respective hydraulic cylinders 6a..., 6b..., and 6c... are detachable to the fixed block section 11 by tightening or detaching the bolts 28.... The reference numeral 29 denotes a concave section that is provided at the rear side of the front face 12u of the heat sleeve fixation section 12 and that has an opening in the front face.

**0029** As described above, one side (front side) of the cylinder attachment mechanism 5m is configured by the fixed block section 11 having a fixed position that has the heat sleeve fixation section 12 supporting the rear end 2r of the heat sleeve 2 and a pair of the front detachable sections 13p and 13q constituting the cylinder detachable section 7m that is provided at both sides of this heat sleeve fixation section 12 and that provides the detachability of the hydraulic cylinders 6a..., 6b..., and 6c..., respectively. Thus, the respective hydraulic cylinders 6a, 6b, and 6c may be attached to the front detachable sections 13p and 13q functioning as the attachment base of the cylinder body. Thus, the simplified attachment structure can advantageously provide an easier attachment and can contribute to a smaller size and a lower cost.

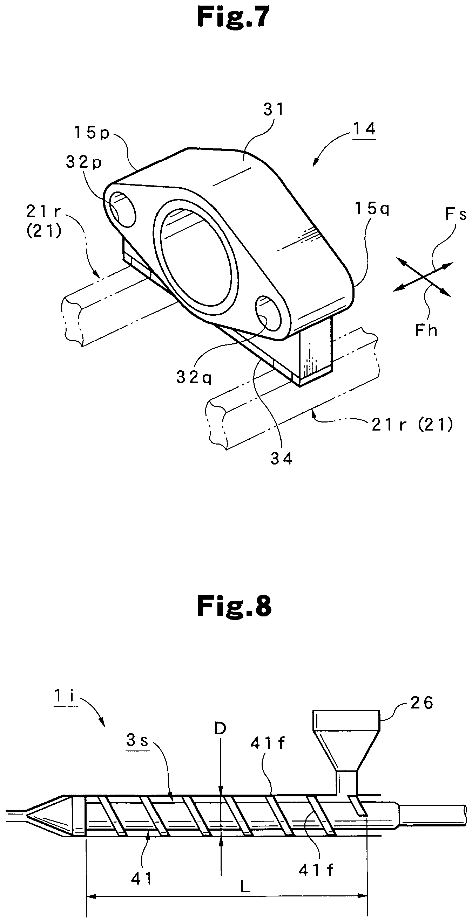

**0030** On the other hand, the support block section 14 is supported on the rear part of the base frame 21 functioning as a guide rail 21r to be displaced in a slidable manner in the direction shown by the arrow Fs (front-and-rear direction). Fig. 7 shows the support block section 14 configured in an integrated manner as a part. This support block section 14 has a motor attachment section 31 provided at the center position in the left-and-right direction Fh. As shown in Fig. 2 and Fig. 3, this motor attachment section 31 is attached with a measurement motor 4m to configure a screw rotation driving section 4 that causes the screw to rotate. Thus, a rear shaft section 3sr of the unique screw 3s inserted to the heat sleeve 2 is allowed to rearwardly protrude from the rear end of the fixed block section 11 through the screw insertion hole 12s of the fixed block section 11 to couple the rear end of the rear shaft section 3sr to a rotation output shaft 4ms of the measurement motor 4m.

**0031** As shown in Fig. 7, both of the left and right sides of the motor attachment section 31 of the support block section 14 have a pair of left and right rear detachable sections 15p and 15q constituting the rear side (the other side) of the cylinder detachable section 7m provided in an integrated manner. Specifically, the right side part of the support block section 14 has a rod bolt insertion hole 32p penetrating in the front-and-rear direction to constitute the right-side rear detachable section 15p. The left side part of the support block section 14 has a rod bolt insertion hole 32q penetrating in the front-and-rear direction to constitute the left-side the rear detachable section 15q.

**0032** In this case, one rear detachable section 15p and the other the rear detachable section 15q have the same configuration except for being symmetric in the left-and-right direction. Thus, the respective rod bolt insertion holes 32p and 32q are inserted with the rod bolt sections 6arn..., 6bm..., and 6crn... formed at the tip end side of the piston rods 6ar..., 6br..., and 6cr... protruded from the respective hydraulic cylinders 6a..., 6b..., and 6c... (which will be described later) and can be attached and fixed by nuts 33.... Specifically, the respective piston rods 6ar..., 6br..., and 6cr... (the rear sides of the respective hydraulic cylinders 6a..., 6b..., and 6c...) are detachable to the support block section 14 by tightening or detaching the respective nuts 33.... The reference numeral 34 denotes a slider base that is supported by the guide rail 21r to be displaced in a slidable manner in the front-and-rear direction Fs and that is integrated with the rear detachable sections 15p and 15q and the lower part of the motor attachment section 31.

0033 As described above, the other side (rear side) of the cylinder attachment mechanism 5m is configured by the support block section 14 that has the screw rotation driving section 4 provided at the rear side of the fixed block section 11 to rotate the rear end of the unique screw 3s inserted with the heat sleeve 2 and a pair of rear detachable sections 15p and 15q. The rear detachable sections 15p and 15q are provided at both sides of this screw rotation driving section 4 and provide the detachability of the tip ends of the piston rods 6ar..., 6br..., and 6cr... protruding from the respective hydraulic cylinders 6a..., 6b..., and 6c..., respectively. Thus, the piston rods 6ar..., 6br..., and 6cr... of the respective hydraulic cylinders 6a, 6b, and 6c may be attached to the rear detachable sections 15p and 15q. Thus, the simplified attachment structure can provide an easier attachment and can contribute to a smaller size and a lower cost.

0034 The configuration as described above provides the detachability of a pair of selected left and right hydraulic cylinders 6a..., 6b..., and 6c... between the fixed block section 11 and the support block section 14. As a result, the attachment of the hydraulic cylinders 6a..., 6b..., and 6c... allows at least selected hydraulic cylinders 6a..., 6b..., and 6c... to provide the screw forward/rear move driving section 5 that forwardly or rearwardly moves the unique screw 3s. It is noted that the injection apparatus base 1im is configured when the injection apparatus 1i shown in Fig. 1 is not attached with the hydraulic cylinders 6a..., 6b..., and 6c... in the injection apparatus 1i.

0035 The injection molding machine 1 according to this invention having the configuration as described above has two important components shown below. The following section will describe the respective components with reference to Fig. 8 and Fig. 9.

0036 First, the unique screw 3s is used for which the L/D ratio between the screw length L and the screw diameter D is set as the specific value Ns to the injection apparatus 1i. Thus, this unique screw 3s is a screw unique to the injection molding machine 1 and is prevented from being changed together with the heat sleeve 2. The use of this the unique screw 3s is the first component important in this invention.

0037 In this case, the L/D ratio shows a value representing the characteristic of the shape of the screw. As shown in Fig. 8, the screw length L represents the length of a part of the screw body 41 including a flight section 41f in the axial direction (the front-and-rear direction Fs). The screw diameter D represents the outer diameter of the flight section 41f. The specific value Ns is desirably selected from a range of 18-25. The selection under these conditions generally allows the L/D ratio value to include desirable values of 22-24. In addition, in this invention in particular, it is assumed that the unique screw 3s providing a fixed resin volume is used. Thus, a desirable value also can be easily selected from the viewpoint of covering the molding of various molding conditions (molded pieces) assumed in advance.

0038 Thus, the size of the unique screw 3s can be selected in consideration of the resin volume (resin cubic volume) Qm by which the assumed maximum large-sized molded piece can be measured. For example, when it is assumed that the resin volume Qm is 400 liters, then the injection molding machine can be set with the maximum large-sized molded piece of 400 liters as a grade. When assuming that the resin volume Qm is 600 liters, then the injection molding machine can be set with the maximum large-sized molded piece of 600 liters as a grade.

0039 The screw forward/rear move driving section 5 is configured by at least two (or exemplarily three) different types of hydraulic cylinders 6a, 6b, and 6c that can be adapted to a molded piece moldable by the unique screw 3s. The use of different types of selectable hydraulic cylinders 6a, 6b, and 6c is the second important component.

**0040** In the embodiment, as shown in Fig. 1, the three different types of hydraulic cylinders 6a, 6b, and 6c were exemplarily used. In this invention, it is assumed that the unique screw 3s is used. Thus, the respective hydraulic cylinders 6a, 6b, and 6c desirably have the same length in the axial direction (the front-and-rear direction Fs) but do not always have to have the same length. In the case of the illustrated configuration, the hydraulic cylinders 6a, 6b, and 6c have the same length in the front-and-rear direction Fs and have different cylinder diameters, respectively. Specifically, the hydraulic cylinder 6a has the smallest cylinder diameter Da while the hydraulic cylinder 6c has the largest cylinder diameter Dc. The hydraulic cylinder 6b has a medium-sized cylinder diameter Db between the cylinder diameters Da and Dc.

**0041** By the above configuration, when the hydraulic cylinder 6a is used as shown in Fig. 9, the maximum pressure Pma can be set to the smallest value. When the hydraulic cylinder 6c is used, the maximum pressure Pmc can be set to the largest value. When the hydraulic cylinder 6b is used, the maximum pressure Pmb can be set to a value between the maximum pressures Pma and Pmc. Furthermore, since the use of the unique screw 3s is assumed, any of the respective hydraulic cylinders 6a, 6b, and 6c can provide the same resin volume Qm. Thus, the respective hydraulic cylinders 6a, 6b, and 6c can be selected based on the magnitude of the maximum pressure (the maximum injection pressure) Pm without requiring the consideration of the resin volume Qm. The case was shown in which the selection was made based on the maximum pressures Pma, Pmb, and Pmc. However, the selection also may be made based on the maximum speed or based on both of the maximum pressures Pma, Pmb, and Pmc and the maximum speed.

**0042** As described above, when the different hydraulic cylinders 6a, 6b, and 6c are used, the hydraulic cylinders 6a, 6b, and 6c are allowed to output different maximum pressures. This eliminates the need to change the unique screw 3s and the heat sleeve 2 and allows the resin volume Qm to be fixed. Thus, the respective hydraulic cylinders 6a, 6b, and 6c can be selected by merely selecting the maximum pressure, thus advantageously providing an easy selection of the respective hydraulic cylinders 6a, 6b, and 6c.

**0043** The illustrated respective hydraulic cylinders 6a, 6b, and 6c are double rod-type hydraulic cylinders. Thus, one hydraulic cylinder (e.g., the hydraulic cylinder 6b) includes a cylinder body 51b as shown in Fig. 1 and Fig. 2. The cylinder body 51b has both end faces from which piston rods 6br and 6bf are protruded, respectively. In this case, a piston rod 6br protrudes from the rear end face of the cylinder body 51b and has the tip end side having a rod bolt section 6brn (Fig. 1) formed to have a predetermined length. A piston rod 6bf is protruded from the front end face of the cylinder body 51b and thus is covered by a tube-shaped safety cover 52b. The cylinder body 51b has an outer periphery face at the axial direction intermediate position that is integrated with an attachment flange 53b. This the attachment flange 53b is configured so that a screw insertion hole 54... is formed at the position corresponding to the screw hole 27... provided in the front end face of the above-described respective front detachable sections 13pu, 13pd, 13qu, and 13qd (see Fig. 10).

**0044** Although one the hydraulic cylinder 6b has been described, other hydraulic cylinders 6a and 6c have the same basic configuration as that of the hydraulic cylinder 6b. In the hydraulic cylinder 6a, the reference numeral 51a denotes a cylinder body, the reference numeral 53a denotes an attachment flange, the reference numeral 6ar denotes a piston rod, and the reference numeral 6arn denotes a rod bolt section, respectively. In the hydraulic cylinder 6c, the reference numeral 51c denotes a cylinder body, the reference numeral 53c denotes an attachment flange, the reference numeral 6cr denotes a piston rod, and the reference numeral 6crn denotes a rod bolt section, respectively. Each of the hydraulic cylinders 6a, 6b, and 6c has two identical hydraulic cylinders 6a..., 6b..., and 6c.... Even when the respective hydraulic cylinders 6a..., 6b..., and 6c... are changed, no change is required for a hydraulic circuit 46 including a hydraulic pump 45 shown in Fig. 1 that controls the driving of the respective hydraulic cylinders 6a..., 6b..., and 6c....

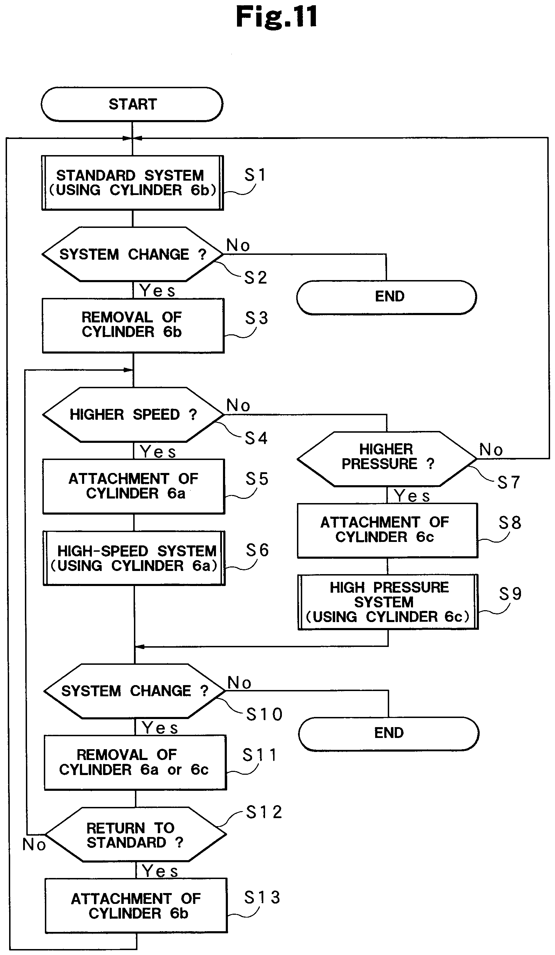

**0045** Next, the following section will describe the use method and function of the injection molding machine 1 including the molding method according to this embodiment with reference to Fig. 1-Fig. 10 and based on the flowchart shown in Fig. 11.

**0046** Now, a case is assumed where the production is performed by a standard system (Step S1). The standard system uses the hydraulic cylinder 6b shown in Fig. 1(b) (intermediate diameter cylinder). Thus, when the standard system is configured, an injection apparatus base 1im shown in Fig. 1 is attached to a hydraulic cylinder 6b shown in Fig. 1(b). Specifically, as shown in Fig. 2 and Fig. 3, a pair of prepared hydraulic cylinders 6b and 6b is attached at the right side and the left side of the cylinder attachment mechanism 5m of the injection apparatus base 1im, respectively, to thereby constitute the injection molding machine 1.

**0047** In this case, the hydraulic cylinder 6b... can be attached to and detached from the cylinder attachment mechanism 5m in the manner as described below.

**0048** First, as shown in Fig. 10, the cylinder body 51b of the hydraulic cylinder 6b at one side (left side) is stored at the front detachable section 13q at the left side of the fixed block section 11 provided at the front side (i.e., between the upper-front detachable section 13qu and the lower-the front detachable section 13qd). As shown in Fig. 1 and Fig. 7, the rod bolt section 6brn of the piston rod 6br protruded from the cylinder body 51b is inserted to a rod bolt insertion hole 32q of the rear detachable section 15q at the left side of the support block section 14 provided at the rear side. The rod bolt section 6brn is screwed with one the nut 33 in advance.

**0049** As shown in Fig. 10, separately-prepared eight bolts 28... are inserted to the total of eight screw insertion holes 54... provided in an attachment flange 53b of the cylinder body 51b. Thereafter, the tip ends of the respective bolts 28... are screwed and tightened with the total of eight screw holes 27... (see Fig. 4) provided in the front end faces of the upper-front detachable section 13qu and the lower-the front detachable section 13qd to thereby fix the cylinder body 51b to the left side position of the fixed block section 11.

**0050** Next, a nut 33 screwed with the rod bolt section 6brn inserted to the rod bolt insertion hole 32q of a rear detachable section 15q is rotated and operated. As shown in Fig. 2 and Fig. 3, the nut 33 is abutted to the front end face of the rear detachable section 15q. Thereafter, the tip end side of the rod bolt section 6brn is attached with a split ring 33r and is further screwed and tightened with the nut 33 to thereby fix the piston rod 6br to the left side position of the support block section 14.

**0051** As a result, the attachment to the left position of the cylinder attachment mechanism 5m of the hydraulic cylinder 6b at one side (left side) is completed. Furthermore, the attachment to the cylinder attachment mechanism 5m of the hydraulic cylinder 6b of the other side (right side) also can be performed by performing the above-described attachment procedure and operation to attach one hydraulic cylinder 6b. During this, the fixed block section 11 and the support block section 14 are both have a fixed position. However, the front detachable section 13p at the fixed block section 11 provided at the right side of the cylinder attachment mechanism 5m (i.e., between the upper-front detachable section 13pu and the lower-front detachable section 13pd) is configured to have a laterally-opened state. Thus, the rod bolt section 6brn of the hydraulic cylinder 6b can be inserted to the rod bolt insertion hole 32p at the right side the rear detachable section 15p of the support block section 14 and the cylinder body 51b of the hydraulic cylinder 6b can be stored in the front detachable section 13p of the fixed block section 11 (i.e., between the upper-front detachable section 13pu and the lower-front detachable section 13pd).

**0052** Therefore, this standard system supplies molding material (pellet) from the hopper 26 into the heat sleeve 2 to use the measurement motor 4m of the screw rotation driving section 4 to rotate the unique screw 3s, thereby plasticizing and melting the molding material. The molten resin is measured and accumulated in the heat sleeve 2 at the front side of the unique screw 3s. Then, a pair of the hydraulic cylinders 6b and 6b constituting the screw forward/rear move driving section 5 is driven-controlled by the hydraulic circuit 46 including the hydraulic pump 45 to forwardly move the unique screw 3s. This allows the measured resin to be injected through the injection nozzle 2n, thereby performing a series of molding steps to fill a metal mold cavity (not shown) with the resin.

**0053** A case is assumed where the injection molding machine 1 of this standard system requires a system change because a change of the metal mold causes such a molded piece that cannot be molded by this standard system or that causes a compromised molding operation (Step S2). In this case, the hydraulic cylinders 6b and 6b are firstly removed from the injection apparatus base 1im (Step S3). The hydraulic cylinders 6b and 6b can be easily removed by performing the above-described procedure and operation of the hydraulic cylinders 6b and 6b in a reverse order.

**0054** If a new molded piece after the system change is a relatively large-sized molded piece that does not require s significantly-high molding accuracy (e.g., everyday goods), a high injection pressure is not required. Thus, molding conditions having a higher injection speed can be used and a high-speed system can be used in this case (Step S4).

**0055** Thus, the high-speed system can use the hydraulic cylinder 6a (small diameter cylinder) shown in Fig. 1(a). In order to constitute the high-speed system, the hydraulic cylinder 6a shown in Fig. 1(a) is attached to the injection apparatus base 1im. Specifically, as shown in Fig. 2 and Fig. 3, a pair of prepared hydraulic cylinders 6a and 6a are provided at the right side and the left side of the cylinder attachment mechanism 5m of the injection apparatus base 1im, respectively, to thereby constitute the injection molding machine 1 (Step S5). The hydraulic cylinders 6a and 6a also can be attached by the attachment procedure and operation similar to the above-described attachment of the hydraulic cylinder 6b. Thus, the injection molding machine 1 can be changed from the standard system to the high-speed system and a series of molding steps can be performed by the injection molding machine 1 using a pair of the hydraulic cylinders 6a and 6a (small diameter cylinder) providing a higher injection speed (Step S6).

**0056** On the other hand, if a new molded piece after the system change requires a high molding accuracy (e.g., CD), a high injection pressure is required. In this case, the injection pressure can be changed to a high pressure system having a higher pressure (Step S7). Thus, the high pressure system can use the hydraulic cylinder 6c (large diameter cylinder) shown in Fig. 1(c). In order to constitute the high pressure system, the hydraulic cylinder 6c shown in Fig. 1(c) is attached to the injection apparatus base 1im. Specifically, as shown in Fig. 2 and Fig. 3, a pair of prepared hydraulic cylinders 6c and 6c is attached at the right side and the left side of the cylinder attachment mechanism 5m of the injection apparatus base 1im, respectively, to thereby constitute the injection molding machine 1 (Step S8). The hydraulic cylinders 6c and 6c also can be attached by the attachment procedure and operation similar to the above-described attachment of the hydraulic cylinder 6b. As a result, the injection molding machine 1 can be changed from a standard system to a high pressure system to perform a series of molding steps using the injection molding machine 1 using a pair of hydraulic cylinders 6c and 6c (large diameter cylinder) providing a higher injection pressure (Step S9).

**0057** A case will be assumed in which the production by the high-speed system or high pressure system is completed and another system change is required (Step S10). In this case, the hydraulic cylinders 6a and 6a or the hydraulic cylinders 6c and 6c are firstly removed from the cylinder attachment mechanism 5m of the injection apparatus base 1im (Step S11). Then, when the current system is returned to the standard system, the hydraulic cylinders 6b and 6b are attached to the cylinder attachment mechanism 5m (Steps S12 and S13). This allows the current system to be returned to the injection molding machine 1 of the standard system (Step S1). When the current system is changed from a high-speed system to a high pressure system on the other hand, the hydraulic cylinders 6c and 6c are attached to the cylinder attachment mechanism 5m (Steps S12, S4, S7, and S8). This consequently can provide a change to the injection molding machine 1 functioning as a high pressure system (Step S9). A system change from a high pressure system to a high-speed system is performed by attaching the hydraulic cylinders 6a and 6a to the cylinder attachment mechanism 5m (Steps S12, S4, and S5). This can provide a change to the injection molding machine 1 functioning as a high-speed system (Step S6).

**0058** Thus, according to the injection molding machine 1 according to this embodiment or the molding method thereof, the unique screw 3 having the L/D ratio of the screw length L and the screw diameter D as the specific value Ns to the injection apparatus 1i is basically used. The injection apparatus 1i includes the cylinder attachment mechanism 5m having the cylinder detachable section 7m that provides the detachability of at least two different types of hydraulic cylinders 6a, 6b, and 6c that can be adapted by the unique screw 3s to a moldable molded piece. In order to perform a molding operation, a hydraulic cylinder 6a (or 6b, 6c) is selected from among the respective hydraulic cylinders 6a, 6b, and 6c in advance that is adaptable to the to-be-molded piece and the unique screw 3s. This selected hydraulic cylinder 6a (or 6b, 6c) is attached to the cylinder attachment mechanism 5m and a molding operation is performed. Thus, even when various products or molded pieces such as parts are produced, no change is required for the unique screw section 3s and the heat sleeve 2 and the selected hydraulic cylinder 6a (or 6b, 6c) can be merely exchanged. In particular, the exchange of the general-purpose commercially-available hydraulic cylinder 6a (or 6b, 6c) is only required, thus achieving the significantly-reduced cost for the part exchange. Furthermore, only parts having a relatively-smaller size than those of the screw and the heat sleeve can be exchanged, thus realizing an exchange operation in a relatively easy and simple manner.

**0059** Furthermore, the use of the unique screw 3s having the L/D ratio set as the specific value Ns to the injection apparatus 1i can provide the selection of the unique screw 3s in advance that can widely cover the molding of various molded pieces. Thus, such a hydraulic cylinder 6a (or 6b, 6c) can be selected optimal to a large-sized molded piece or a precision molded piece for example to thereby provide appropriate molding conditions to various molded pieces. Furthermore, no need to change the unique screw 3s and the heat sleeve 2 can provide a fixed plasticization environment (plasticization performance). Thus, a wasteful plasticization variation having an influence on the molded piece quality (e.g., insufficient plasticization) can be avoided, thus contributing to the improvement of the qualities of various molded pieces.

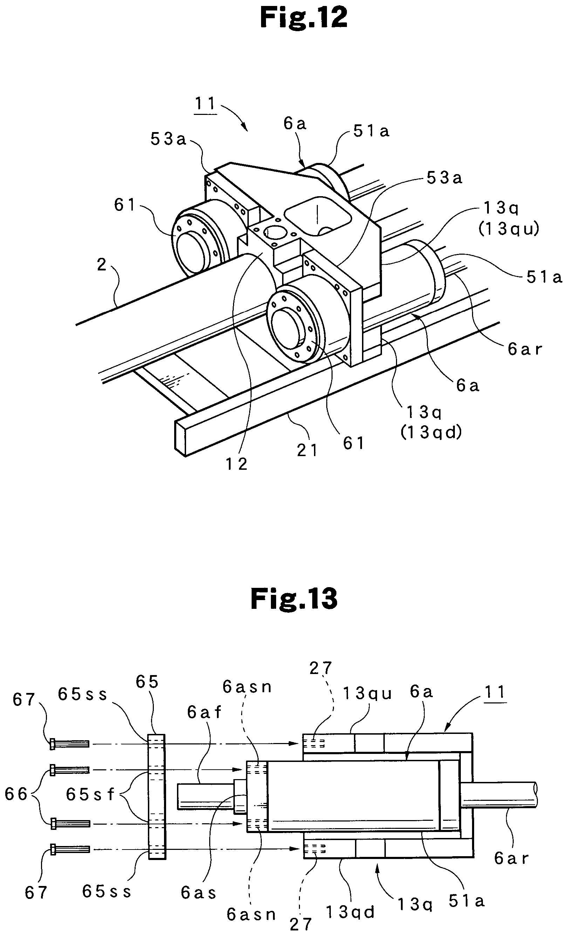

**0060** Next, the following section will describe the modification example of the hydraulic cylinder 6a... used in the injection molding machine 1 according to this embodiment with reference to Fig. 12 and Fig. 13.

**0061** Fig. 12 illustrates a modification example of the rod type of the hydraulic cylinder 6a.... The hydraulic cylinder 6a... shown in Fig. 1(Fig. 2) is a double rod-type hydraulic cylinder configured so that the piston rods 6br and 6bf are protruded from both end faces of a piston included in the cylinder body 51b, respectively.

**0062** On the other hand, the hydraulic cylinder 6a... shown in Fig. 12 according to a modification example uses a single rod-type hydraulic cylinder. Thus, the end face of the other side (front side) of the cylinder body 51b is configured as a closed end face 61. The piston included in the cylinder body 51b is configured so that the piston rod 6br is protruded from only one end face.

**0063** As described above, the hydraulic cylinders 6a, 6b, and 6c used is not limited to any hydraulic cylinder type and may be a double rod-type hydraulic cylinder or a single rod-type hydraulic cylinder for example. Thus, the hydraulic cylinders 6a, 6b, and 6c can be selected with an increased freedom degree. The hydraulic control system also can be designed with an increased freedom degree. Thus, an appropriate hydraulic control system can be structured in consideration of the advantages of the double rod-type one and the single rod-type one, respectively.

**0064** Fig. 13 illustrates a modification example in the case where the hydraulic cylinder 6a... has a different form (or a different appearance or shape for example). The embodiment shown in Fig. 1 (Fig. 2) illustrates a configuration example in which the cylinder attachment mechanism 5m matching a commercially-available hydraulic cylinder 6a... for example is configured or the hydraulic cylinder 6a... matching an optimized cylinder attachment mechanism 5m is used as a so-called custom-made article. Thus, the matching is required in advance between the cylinder attachment mechanism 5m and each hydraulic cylinder 6a....

**0065** On the other hand, in the case of the hydraulic cylinder 6a... shown in Fig. 13 according to modification example, no matching is obtained between the commercially-available and general-purpose hydraulic cylinder 6a... and the optimized cylinder attachment mechanism 5m. In this case, another attachment (attachment adapter) 65 can be introduced between the hydraulic cylinder 6a... and the cylinder attachment mechanism 5m.

**0066** The attachment 65 shown in Fig. 13 as an example uses one doughnut-shaped plate. A plurality of screw insertion holes 65sf... provided in a plane closed to the center of the attachment 65 are inserted with a plurality of fixation bolts 66..., respectively and can be subsequently fixed by being screwed and tightened with a plurality of screw holes 6asn... provided in the end face 6as of the hydraulic cylinder 6a, respectively. As a result, this hydraulic cylinder 6a can be added with a subsequently-installed flange section. A plurality of screw insertion holes 65ss... provided in a plane close to the periphery of the attachment 65 may be inserted with a plurality of fixation bolts 67..., respectively, and may be subsequently fixed by being screwed and tightened with a plurality of screw holes 27... provided in the respective front end faces of the upper-front detachable section 13qu and the lower-the front detachable section 13qd of the front detachable section 13q of the fixed block section 11, respectively. Thus, even the hydraulic cylinders 6a... having various shapes can be easily attached to the cylinder attachment mechanism 5m by preparing the corresponding attachments (attachment adapters) 65. Fig. 13 assumes a case where the attachment 65 is directly fixed to the end face 6as of the hydraulic cylinder 6a. However, many commercially-available hydraulic cylinders are configured as a flange-attached hydraulic cylinder in which a flange is integrated with the outer face of the cylinder. Thus, various fixation methods can be used such as a method to fix the attachment 65 to this flange.

**0067** In Fig. 12 and Fig. 13, the same parts as those shown in Fig. 1-Fig. 10 are denoted with the same reference numerals to clarify the configurations thereof and will not be further described.

**0068** A preferred embodiment including a modification example has been described in detail. However, this invention is not limited to such an embodiment. Thus, an arbitrary change, addition, or deletion can be made in the configuration, shape, material, number, or numerical value for example in detail within a scope as defined in the appended claims.

0069 For example, three or more types of hydraulic cylinders 6a, 6b, and 6c have been illustrated as two or more different types of hydraulic cylinders. However, two or more or four or more types of the hydraulic cylinders 6a, 6b, and 6c also may be provided. The specific value Ns is desirably selected from a range of 18-25 but also may be other values. A technical importance is placed on the use of a specific value. Furthermore, a case has been shown in which different maximum pressures are outputted from the respective hydraulic cylinders 6a, 6b, and 6c, respectively. However, other cases also may be considered where characteristic values other than the maximum pressure are different or another characteristic value (e.g., the maximum stroke) is used in addition to the maximum pressure. A case has been shown with the use of the fixed block section 11 having a fixed position that has the heat sleeve fixation section 12 supporting the rear end 2r of the heat sleeve 2 and a pair of the front detachable sections 13p and 13q constituting the cylinder detachable section 7m that is provided at both sides of this heat sleeve fixation section 12 and that provides the detachability of the hydraulic cylinders 6a..., 6b..., and 6c..., respectively. However, another configuration having a similar function also may be used. A case has been shown with the use of the cylinder attachment mechanism 5m configured to include the screw rotation driving section 4 that is provided at the rear side of the fixed block section 11 and that provides the rotation of the rear end of the unique screw 3s inserted to the heat sleeve 2 and the support block section 14 having a pair of rear detachable sections 15p and 15q that are provided at both sides of this screw rotation driving section 4 and that constitute the cylinder detachable section 7m providing the detachability of the tip ends of the piston rods 6ar..., 6br..., and 6cr... protruding from the respective hydraulic cylinders 6a..., 6b..., and 6c..., respectively.

### Industrial Applicability

**0070** This invention can be applied to various injection molding machines including a screw forward/rear move driving section to forwardly or rearwardly move a screw at least by a hydraulic cylinder and can be applied to a molding method using the injection molding machine.

### Reference Signs List

**0071** 1: Injection molding machine, 1i: Injection apparatus, 2: Heat sleeve, 2r: Heat sleeve rear end, 3s: Unique screw, 4: Screw rotation driving section, 5: Screw forward/rear move driving section, 5m: Cylinder attachment mechanism, 6a: Hydraulic cylinder, 6b: Hydraulic cylinder, 6c: Hydraulic cylinder, 6ar: Piston rod, 6br: Piston rod, 6cr: Piston rod, 7m: Cylinder detachable section, 11: Fixed block section, 12: Heat sleeve fixation section, 13p: Front detachable section, 13q: Front detachable section, 14: Support block section, 15p: Rear detachable section, 15q: Rear detachable section, L: Screw length, D: Screw diameter, Ns: Specific value

### Citation List

### Patent Literature

0072
Patent Literature 1
   Japanese Unexamined Patent Application Publication No. JP H10 146864 A
0073 Patent Literature 2
   Japanese Unexamined Patent Application Publication No. JP H08 318551 A
Patent Literature 3
   US 4850841 A
Patent Literature 4
   WO 2017/214387 A1

## Claims

1. An injection molding machine (1), comprising: an injection apparatus (1i) having a screw rotation driving section (4) for rotating a screw (3s) inserted to a heat sleeve (2) and a screw forward/rear move driving section (5) for forwardly or rearwardly moving the screw (3s) at least by a hydraulic cylinder, wherein the screw (3s) has an L/D ratio between a screw length L and a screw diameter D that is set as a specific value to the injection apparatus (1i),
wherein the injection apparatus (1i) includes a cylinder attachment mechanism (5m) having a cylinder detachable section (7m) that is configured to allow the detachability of two or more different types of hydraulic cylinders (6a-c), the two or more different types of hydraulic cylinders (6a-c) comprising hydraulic cylinders (6a-c) having different dimensions to one another, each of the hydraulic cylinders (6a-c) being adaptable to a molded piece that can be molded by the screw (3s),
wherein the cylinder attachment mechanism (5m) includes a fixed block section (11) having a fixed position that has a heat sleeve fixation section (12) to support a rear end (2r) of the heat sleeve (2) and two pairs of front detachable sections (13p, 13q), one of the pairs of front detachable sections (13p, 13q) being provided at each side of the heat sleeve fixation section (12) to provide the detachability of the hydraulic cylinders (6a-c), respectively, and
wherein the cylinder attachment mechanism (5m) includes the screw rotation driving section (4) that is provided at the rear side of the fixed block section (11) and that provides the rotation of the rear end of the screw (3s) inserted to the heat sleeve (2) and a support block section (14) having two pairs of rear detachable sections (15p, 15q), one of the pairs of rear detachable sections (15p, 15q) being provided at each side of this screw rotation driving section (4) and that constitute the cylinder detachable section (7m) providing the detachability of the tip ends of the piston rods (6ar-cr) protruding from the respective hydraulic cylinders (6a-c), respectively.

2. The injection molding machine (1) according to claim 1, **characterized in that**: the specific value is selected from a range of 18-25.

3. The injection molding machine (1) according to claim 1, **characterized in that**: the respective hydraulic cylinders (6a-c) output different maximum pressures.

4. The injection molding machine (1) according to claim 1, **characterized in that**: the respective hydraulic cylinders (6a-c) output different maximum speeds.

5. The injection molding machine (1) according to claim 1, **characterized in that**: the respective hydraulic cylinders (6a-c) output different maximum pressures and maximum speeds.

6. The injection molding machine (1) according to claim 1, 3, 4, or 5, **characterized in that**: the respective hydraulic cylinders (6a-c) are double rod-type hydraulic cylinders.

7. The injection molding machine (1) according to claim 1, 3, 4, or 5, **characterized in that**: the respective hydraulic cylinders (6a-c) are single rod-type hydraulic cylinders.

8. A molding method of an injection molding machine (1) comprising: an injection apparatus (1i) having a screw rotation driving section (4) for rotating a screw (3s) inserted to a heat sleeve (2) and a screw forward/rear move driving section (5) for forwardly or rearwardly moving the screw (3s) at least by a hydraulic cylinder, the screw (3s) having an L/D ratio between a screw length L and a screw diameter D that is set as a specific value to the injection apparatus (1i),
wherein the injection apparatus (1i) includes a cylinder attachment mechanism (5m) having a cylinder detachable section (7m) that allows the detachability of two or more different types of hydraulic cylinders (6a-c) the two or more different types of hydraulic cylinders (6a-c) comprising hydraulic cylinders (6a-c) having different dimensions to one another, each of the hydraulic cylinders (6a-c) being adaptable to a molded piece that can be molded by the screw (3s),
wherein prior to a molding operation, a hydraulic cylinder (6a-c) is selected from among the two or more different types of hydraulic cylinders (6a-c) in advance that is adaptable to a to-be-molded piece and the screw (3s) and this selected hydraulic cylinder (6a-c) is attached to the cylinder attachment mechanism (5m) and a molding operation is performed,
wherein the cylinder attachment mechanism (5m) includes a fixed block section (11) having a fixed position that has a heat sleeve fixation section (12) to support a rear end (2r) of the heat sleeve (2) and two pairs of front detachable sections (13p, 13q), one of the pairs of front detachable sections (13p, 13q) being provided at each side of the heat sleeve fixation section (12) to provide the detachability of the hydraulic cylinders (6a-c), respectively, and
wherein the cylinder attachment mechanism (5m) includes the screw rotation driving section (4) that is provided at the rear side of the fixed block section (11) and that provides the rotation of the rear end of the screw (3s) inserted to the heat sleeve (2) and a support block section (14) having two pairs of rear detachable sections (15p, 15q), one of the pairs of rear detachable sections (15p, 15q) being provided at each side of this screw rotation driving section (4) and that constitute the cylinder detachable section (7m) providing the detachability of the tip ends of the piston rods (6ar-cr) protruding from the respective hydraulic cylinders (6a-c), respectively.

9. The molding method of the injection molding machine (1) according to claim 8, wherein the specific value is selected from a range of 18-25.

10. The molding method of the injection molding machine (1) according to claim 8, wherein the respective hydraulic cylinders (6a-c) output different maximum pressures.

11. The molding method of the injection molding machine (1) according to claim 8, wherein the respective hydraulic cylinders (6a-c) output different maximum speeds.

12. The molding method of the injection molding machine (1) according to claim 8, wherein the respective hydraulic cylinders (6a-c) output different maximum pressures and maximum speeds.

## Patentansprüche

1. Spritzgießmaschine (1), umfassend: eine Einspritzvorrichtung (1i) mit einem Schraubenrotationsantriebsabschnitt (4) zum Drehen einer in eine Heizmanschette (2) eingesetzten Schraube (3s) und einem Schraubenvorwärts-/Rückwärtsbewegungsantriebsabschnitt (5) zum Vorwärts- oder Rückwärtsbewegen der Schraube (3s) zumindest durch einen Hydraulikzylinder, wobei die Schraube (3s) ein L/D-Verhältnis zwischen einer Schraubenlänge L und einem Schraubendurchmesser D aufweist, das als spezifischer Wert für die Einspritzvorrichtung (1i) gesetzt ist,
wobei die Einspritzvorrichtung (1i) einen Zylinderanbringungsmechanismus (5m) mit einem abnehmbaren Zylinderabschnitt (7m) umfasst, der so konfiguriert ist, dass die Abnehmbarkeit von zwei oder mehr verschiedenen Arten von Hydraulikzylindern (6a-c) ermöglicht wird, wobei die zwei oder mehr verschiedenen Arten von Hydraulikzylinder (6a-c) Hydraulikzylinder (6a-c) mit unterschiedlichen Abmessungen umfassen, wobei jeder der Hydraulikzylinder (6a-c) an ein Formstück angepasst werden kann, das durch die Schraube (3s) geformt werden kann,
wobei der Zylinderanbringungsmechanismus (5m) einen feststehenden Blockabschnitt (11) mit einer feststehenden Position umfasst, der einen Heizmanschetten-Befestigungsabschnitt (12) zum Stützen eines hinteren Endes (2r) der Heizmanschette (2) und zwei Paare von vorderen abnehmbaren Abschnitten (13p, 13q) aufweist, wobei eines der Paare der vorderen abnehmbaren Abschnitte (13p, 13q) an jeder Seite des Befestigungsabschnitts (12) der Heizmanschette bereitgestellt ist, um jeweils die Abnehmbarkeit der Hydraulikzylinder (6a-c) zu gewährleisten, und
wobei der Zylinderanbringungsmechanismus (5m) den Schraubenrotationsantriebsabschnitt (4), der an der Rückseite des festen Blockabschnitts (11) bereitgestellt ist und die Rotation des hinteren Endes der in die Heizmanschette (2) eingesetzten Schraube (3s) bewirkt, und einen Stützblockabschnitt (14) mit zwei Paaren hinterer abnehmbarer Abschnitte (15p, 15q) aufweist, wobei eines der Paare der hinteren abnehmbaren Abschnitte (15p, 15q) an jeder Seite dieses Schraubenrotationsantriebsabschnitts (4) bereitgestellt ist und die den abnehmbaren Zylinderabschnitt (7m) bilden, der die Abnehmbarkeit der Spitzenenden der Kolbenstangen (6ar-cr) gewährleistet, die jeweils aus den entsprechenden Hydraulikzylindern (6a-c) herausragen.

2. Spritzgießmaschine (1) nach Anspruch 1, **dadurch gekennzeichnet, dass** der spezifische Wert aus einem Bereich von 18 bis 25 ausgewählt ist.

3. Spritzgießmaschine (1) nach Anspruch 1, **dadurch gekennzeichnet, dass** die jeweiligen Hydraulikzylinder (6a-c) unterschiedliche Maximaldrücke abgeben.

4. Spritzgießmaschine (1) nach Anspruch 1, **dadurch gekennzeichnet, dass** die jeweiligen Hydraulikzylinder (6a-c) unterschiedliche Maximalgeschwindigkeiten abgeben.

5. Spritzgießmaschine (1) nach Anspruch 1, **dadurch gekennzeichnet, dass** die jeweiligen Hydraulikzylinder (6a-c) unterschiedliche Maximaldrücke und Maximalgeschwindigkeiten ausgeben.

6. Spritzgießmaschine (1) nach Anspruch 1, 3, 4 oder 5, **dadurch gekennzeichnet, dass** die jeweiligen Hydraulikzyliner (6a-c) doppellstangenförmige Hydraulikzylinder sind.

7. Spritzgießmaschine (1) nach einem der Ansprüche 1, 3, 4 oder 5, **dadurch gekennzeichnet, dass** die jeweiligen Hydraulikzylinder (6a-c) Einstangen-Hydraulikzylinder sind.

8. Formverfahren einer Spritzgießmaschine (1), umfassend: eine Einspritzvorrichtung (1i) mit einem Schraubenrotationsantriebsabschnitt (4) zum Drehen einer Schraube (3s), die in eine Heizmanschette (2) eingesetzt ist, und einem Schraubenvorwärts-/Rückwärtsbewegungsantriebsabschnitt (5) zum Vorwärts- oder Rückwärtsbewegen der Schraube (3s) zumindest durch einen Hydraulikzylinder, wobei die Schraube (3s) ein L/D-Verhältnis zwischen einer Schraubenlänge L und einem Schraubendurchmesser D aufweist, das als spezifischer Wert für die Einspritzvorrichtung (1i) gesetzt ist,
wobei die Einspritzvorrichtung (1i) einen Zylinderanbringungsmechanismus (5m) mit einem abnehmbaren Zylinderabschnitt (7m) umfasst, der die Abnehmbarkeit von zwei oder mehr verschiedenen Arten von Hydraulikzylindern (6a-c) ermöglicht, wobei die zwei oder mehr verschiedenen Arten von Hydraulikzylindern (6a-c) Hydraulikzylinder (6a-c) mit unterschiedlichen Abmessungen zueinander umfassen, wobei jeder der Hydraulikzylinder (6a-c) an ein Formteil anpassbar ist, das durch die Schraube (3s) geformt werden kann,
wobei vor einem Formvorgang ein Hydraulikzylinder (6a-c) aus den zwei oder mehr verschiedenen Arten von Hydraulikzylindern (6a-c) im Voraus ausgewählt wird, der an ein zu formendes Teil und die Schraube (3s) anpassbar ist, und dieser ausgewählte Hydraulikzylinder (6a-c) an dem Zylinderanbringungsmechanismus (5m) angebracht wird und ein Formvorgang durchgeführt wird,
wobei der Zylinderanbringungsmechanismus (5m) einen feststehenden Blockabschnitt (11) mit einer feststehenden Position umfasst, der einen Heizmanschetten-Befestigungsabschnitt (12) zum Stützen eines hinteren Endes (2r) der Heizmanschette (2) und zwei Paare von vorderen abnehmbaren Abschnitten (13p, 13q) aufweist, wobei eines der Paare der vorderen abnehmbaren Abschnitte (13p, 13q) an jeder Seite des Befestigungsabschnitts (12) der Heizmanschette bereitgestellt ist, um jeweils die Abnehmbarkeit der Hydraulikzylinder (6a-c) zu gewährleisten, und
wobei der Zylinderanbringungsmechanismus (5m) den Schraubenrotationsantriebsabschnitt (4), der an der Rückseite des festen Blockabschnitts (11) bereitgestellt ist und die Rotation des hinteren Endes der in die Heizmanschette (2) eingesetzten Schraube (3s) bewirkt, und einen Stützblockabschnitt (14) mit zwei Paaren hinterer abnehmbarer Abschnitte (15p, 15q) aufweist, wobei eines der Paare der hinteren abnehmbaren Abschnitte (15p, 15q) an jeder Seite dieses Schraubenrotationsantriebsabschnitts (4) bereitgestellt ist und die den abnehmbaren Zylinderabschnitt (7m) bilden, der die Abnehmbarkeit der Spitzenenden der Kolbenstangen (6ar-cr) bereitstellt, die jeweils aus den entsprechenden Hydraulikzylindern (6a-c) herausragen.

9. Spritzgießverfahren der Spritzgießmaschine (1) nach Anspruch 8, wobei der spezifische Wert aus einem Bereich von 18-25 ausgewählt ist.

10. Spritzgießverfahren der Spritzgießmaschine (1) nach Anspruch 8, wobei die jeweiligen Hydraulikzylinder (6a-c) unterschiedliche Maximaldrücke abgeben.

11. Spritzgießverfahren der Spritzgießmaschine (1) nach Anspruch 8, wobei die jeweiligen Hydraulikzylinder (6a-c) unterschiedliche Maximalgeschwindigkeiten abgeben.

12. Spritzgießverfahren der Spritzgießmaschine (1) nach Anspruch 8, wobei die jeweiligen Hydraulikzylinder (6a-c) unterschiedliche Maximaldrücke und Maximaldrehzahlen ausgeben.

## Revendications

1. Machine de moulage par injection (1), comprenant : un appareil d'injection (1i) ayant une section d'entraînement en rotation de vis (4) pour faire tourner une vis (3s) insérée dans un manchon thermique (2) et une section d'entraînement de déplacement avant/arrière de vis (5) pour déplacer la vis vers l'avant ou vers l'arrière (3s) au moins par un vérin hydraulique, dans lequel la vis (3s) a un rapport L/D entre une longueur de vis L et un diamètre de vis D qui est défini comme une valeur précise pour l'appareil d'injection (1i),
dans lequel l'appareil d'injection (1i) comprend un mécanisme de fixation de cylindre (5m) ayant une section détachable de cylindre (7m) qui est configurée pour permettre la détachabilité de deux types, ou davantage, différents de cylindres hydrauliques (6a-c), les deux types, ou davantage, différents de cylindres hydrauliques (6a-c) comprenant des cylindres hydrauliques (6a-c) ayant des dimensions différentes les uns des autres, chacun des cylindres hydrauliques (6a-c) étant adaptable à une pièce moulée qui peut être moulée par la vis (3s),
dans lequel le mécanisme de fixation de cylindre (5m) comprend une section de bloc fixe (11) ayant une position fixe qui a une section de fixation de manchon thermique (12) pour supporter une extrémité arrière (2r) de manchon thermique (2) et deux paires de sections détachables avant (13p, 13q), l'une des paires de sections détachables avant (13p, 13q) étant prévue de chaque côté de la section de fixation de manchon thermique (12) pour assurer la détachabilité des cylindres hydrauliques (6a-c), respectivement, et
dans lequel le mécanisme de fixation de cylindre (5m) comprend la section d'entraînement de rotation de vis (4) qui est prévue sur le côté arrière de la section de bloc fixe (11) et qui assure la rotation de l'extrémité arrière de la vis (3s) insérée dans le manchon thermique (2) et une section de bloc de support (14) ayant deux paires de sections détachables arrière (15p, 15q), l'une des paires de sections détachables arrière (15p, 15q) étant prévue de chaque côté de cette section d'entraînement de rotation de vis (4) et qui constituent la section détachable de cylindre (7m) assurant la détachabilité des extrémités de pointe des tiges de piston (6ar-cr) dépassant des cylindres hydrauliques respectifs (6a-c), respectivement.

2. Machine de moulage par injection (1) selon la revendication 1, **caractérisée en ce que** : la valeur précise est choisie dans une plage de 18 à 25.

3. Machine de moulage par injection (1) selon la revendication 1, **caractérisée en ce que** : les vérins hydrauliques respectifs (6a-c) produisent des pressions maximales différentes.

4. Machine de moulage par injection (1) selon la revendication 1, **caractérisée en ce que** : les vérins hydrauliques respectifs (6a-c) produisent des vitesses maximales différentes.

5. Machine de moulage par injection (1) selon la revendication 1, **caractérisée en ce que** : les vérins hydrauliques respectifs (6a-c) produisent des pressions maximales et des vitesses maximales différentes.

6. Machine de moulage par injection (1) selon la revendication 1, 3, 4 ou 5, **caractérisée en ce que** : les vérins hydrauliques respectifs (6a-c) sont des vérins hydrauliques à double tige.

7. Machine de moulage par injection (1) selon la revendication 1, 3, 4,ou 5 **caractérisée en ce que** : les vérins hydrauliques respectifs (6a-c) sont des cylindres hydrauliques en forme de tige simple.

8. Machine de moulage par injection (1), comprenant : un appareil d'injection (1i) ayant une section d'entraînement en rotation de vis (4) pour faire tourner une vis (3s) insérée dans un manchon thermique (2) et une section d'entraînement de déplacement avant/arrière de vis (5) pour déplacer la vis vers l'avant ou vers l'arrière (3s) au moins par un vérin hydraulique, la vis (3s) ayant un rapport L/D entre une longueur de vis L et un diamètre de vis D qui est défini comme une valeur précise pour l'appareil d'injection (1i),
dans lequel l'appareil d'injection (1i) comprend un mécanisme de fixation de cylindre (5m) ayant une section détachable de cylindre (7m) qui permet la détachabilité de deux types, ou davantage, différents de cylindres hydrauliques (6a-c), les deux types, ou davantage, différents de cylindres hydrauliques (6a-c) comprenant des cylindres hydrauliques (6a-c) ayant des dimensions différentes les uns des autres, chacun des cylindres hydrauliques (6a-c) étant adaptable à une pièce moulée qui peut être moulée par la vis (3s),
dans lequel avant une opération de moulage, un vérin hydraulique (6a-c) est sélectionné parmi les deux types, davantage, différents de vérins hydrauliques (6a-c) à l'avance qui est adaptable à une pièce à mouler et à la vis (3s) et ce vérin hydraulique sélectionné (6a-c) est fixé au mécanisme de fixation du vérin (5m) et une opération de moulage est effectuée,
dans lequel le mécanisme de fixation de cylindre (5m) comprend une section de bloc fixe (11) ayant une position fixe qui a une section de fixation de manchon thermique (12) pour supporter une extrémité arrière (2r) du manchon thermique (2) et deux paires de sections détachables avant (13p, 13q), l'une des paires de sections détachables avant (13p, 13q) étant prévue de chaque côté de la section de fixation de manchon thermique (12) pour assurer la détachabilité des cylindres hydrauliques (6a-c), respectivement, et
dans lequel le mécanisme de fixation de cylindre (5m) comprend la section d'entraînement de rotation de vis (4) qui est prévue sur le côté arrière de la section de bloc fixe (11) et qui assure la rotation de l'extrémité arrière de la vis (3s) insérée dans le manchon thermique (2) et une section de bloc de support (14) ayant deux paires de sections détachables arrière (15p, 15q), l'une des paires de sections détachables arrière (15p, 15q) étant prévue de chaque côté de cette section d'entraînement de rotation de vis (4) et qui constituent la section détachable de cylindre (7m) assurant la détachabilité des extrémités de pointe des tiges de piston (6ar-cr) dépassant des cylindres hydrauliques respectifs (6a-c), respectivement.

9. Procédé de moulage de la machine de moulage par injection (1) selon la revendication 8, dans lequel la valeur précise est sélectionnée dans une plage de 18 à 25.

10. Procédé de moulage de la machine de moulage par injection (1) selon la revendication 8, dans lequel les vérins hydrauliques respectifs (6a-c) produisent des pressions maximales différentes.

11. Procédé de moulage de la machine de moulage par injection (1) selon la revendication 8, dans lequel les vérins hydrauliques respectifs (6a-c) produisent des vitesses maximales différentes.

12. Procédé de moulage de la machine de moulage par injection (1) selon la revendication 8, dans lequel les vérins hydrauliques respectifs (6a-c) produisent des pressions maximales ainsi que des vitesses maximales différentes.
